# EUROPEAN PATENT APPLICATION

(11) **EP 4 517 717 A1**
(43) Date of publication of application: **05.03.2025**
(21) Application number: 24182865.6
(22) Date of filing: 18.06.2024
(51) Int. Cl.: G09B 5/10, G09B 5/12, G09B 9/02, G09B 9/08, G06Q 10/0639, G09B 19/16

(54) **INTELLIGENT MONITORING AND EVALUATION OF CREW COMMUNICATION**

(30) Priority: 28.08.2023 US 202318457164
(71) Applicant: The Boeing Company, Arlington, VA 22202 (US)
(72) Inventor: Wainwright, Alexander L., Arlington VA, 22202 (US); Kresevic, Jesse L., Arlington VA, 22202 (US); Perry, Nathan C., Arlington VA, 22202 (US)
(74) Representative: Witte, Weller & Partner Patentanwälte mbB

(57) **Abstract**

Techniques for monitoring of communication in a physical environment are disclosed. The techniques include receiving a textual representation based on verbal communication from one or more users relating to a physical environment. The techniques further include generating a communicated state of the physical environment based on the textual representation and determining an actual state of the physical environment based on one or more measured characteristics of the environment. The techniques further include automatically providing an alert to at least one of the one or more users, based on comparing the communicated state of the physical environment with the actual state of the physical environment.

## Description

### FIELD

Aspects of the present disclosure relate to intelligent monitoring of communication in an environment.

### BACKGROUND

Training, and operation, of aircraft systems is critically important. Currently, human instructors are typically responsible for the monitoring and assessment of students' communication skills during aviation training activities. The assessment of crew communication during training sessions conducted in flight training devices (e.g. flat panel trainers, full-flight simulators, or any other suitable flight training devices) is conducted by the human instructor who is facilitating the training session. This human-in-the-loop activity introduces subjectivity to the assessment process, potentially leading to misclassifications of communication performance and other errors. Further, access to expert human instructors is limited, which in turn limits the amount of training that can be conducted.

Automated training systems are designed to provide greater opportunity for students to engage in training activities by reducing the reliance on expert human instructors. However, without the ability to provide automatic assessment of crew communications, the training opportunities currently afforded to students by these systems are limited to single-user training activities. Since much of the aviation training curriculum is designed for crewed activities, automated training systems currently have limited applicability to training.

### SUMMARY

Aspects include a computer-implemented method. The method includes receiving a textual representation based on verbal communication from one or more users relating to a physical environment. The method further includes generating a communicated state of the physical environment based on the textual representation. The method further includes determining an actual state of the physical environment based on one or more measured characteristics of the environment. The method further includes automatically providing an alert to at least one of the one or more users, based on comparing the communicated state of the physical environment with the actual state of the physical environment.

Aspects further include a non-transitory computer-readable medium containing computer program code that, when executed by operation of one or more computer processors, performs operations. The operations include receiving a textual representation based on verbal communication from one or more users relating to a physical environment. The operations further include generating a communicated state of the physical environment based on the textual representation. The operations further include determining an actual state of the physical environment based on one or more measured characteristics of the environment. The operations further include automatically providing an alert to at least one of the one or more users, based on comparing the communicated state of the physical environment with the actual state of the physical environment.

Aspects further include a system. The system includes a computer processor and a memory having instructions stored thereon which, when executed on the computer processor, performs operations. The operations include receiving a textual representation based on verbal communication from one or more users relating to a physical environment. The operations further include generating a communicated state of the physical environment based on the textual representation. The operations further include determining an actual state of the physical environment based on one or more measured characteristics of the environment. The operations further include automatically providing an alert to at least one of the one or more users, based on comparing the communicated state of the physical environment with the actual state of the physical environment.

In some further aspects, in combination with any example above or below, the communicated state of the physical environment includes one or more communicated characteristics of an aircraft, and the actual state of the physical environment includes one or more measured characteristics of the aircraft.

In some further aspects, in combination with any example above or below, generating the communicated state of the physical environment based on the textual representation includes: identifying one or more expected checklist items or procedures for an aircraft, and determining the communicated state of the physical environment by probabilistically matching a first phrase in the textual representation with a second phrase in the one or more expected checklist items or procedures.

In some further aspects, in combination with any example above or below, identifying one or more expected checklist items or procedures for the aircraft includes retrieving the one or more expected checklist items or procedures from an electronic repository.

In some further aspects, in combination with any example above or below, the one or more expected checklist items or procedures for the aircraft include a blank variable relating to a specific variable type, and the probabilistic matching is based on determining that at least a portion of the first phrase matches the specific variable type.

In some further aspects, in combination with any example above or below, the specific variable type includes a numeric variable type.

In some further aspects, in combination with any example above or below, the probabilistic matching uses a hidden Markov model.

In some further aspects, in combination with any example above or below, the method or operation includes generating a user task list comprises a plurality of tasks for the one or more users in the physical environment, and determining, based on the textual representation, that the one or more users have completed at least a portion of the user task list.

In some further aspects, in combination with any example above or below, the method or operation includes determining, based on the user task list, that a workload threshold is reached for a user of the one or more users, and based on the determining providing an alert to the user.

In some further aspects, in combination with any example above or below, comparing the communicated state of the physical environment with the actual state of the physical environment includes determining that a difference between a first state value in the communicated state and a second state value in the actual state exceeds a threshold.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
Figure 1 depicts an environment for intelligent monitoring and evaluation of crew communication, according to an aspect.
Figure 2 illustrates a controller for intelligent monitoring and evaluation of crew communication, according to an aspect.
Figures 3A-C illustrate intelligent monitoring and evaluation of crew communication, according to an aspect.
Figure 4 is a flowchart illustrating intelligent monitoring and evaluation of crew communication, according to an aspect.

### DETAILED DESCRIPTION

Automated training systems allow users to engage in training activities without the direct involvement, let alone the physical presence, of a human instructor. For example, the delivery of training content and assessment of user performance can be performed automatically by computerized systems. Among the many benefits this provides is that training curriculum can be far more easily completed simultaneously by a crew (e.g., more than one individual). Training for a crew can be greatly improved by providing the capability to automatically monitor and assess crew communication, extending the application of automated training systems to crewed training activities.

One or more techniques discussed below improves on these prior solutions by providing techniques for the assessment of crew communications to be used in training or operational scenarios. In an aspect, an electronic system takes transcriptions of words spoken by users (e.g., provided by a speech-to-text engine) and performs probabilistic determinations to match the spoken words to known procedures or checklists for aircraft flight training or operation. This allows the initiation and completion of checklists or procedures to be monitored automatically by a computer system, rather than a human instructor.

Further, the state of the training or operational environment is monitored by the system, and communications made by users regarding the environment state, and interactions with the environment, are validated to ensure they are accurate. This allows the system to build a model of the environment state that has been shared between multiple crewmembers. Comparison of this shared model to the true environment state can reveal gaps in a user's shared knowledge of the training or operational system. The comparison of the shared model to the true environment state can be used for training purposes, or to raise an alert in operational scenarios.

Further, data describing the state of the training or operational environment is analyzed by a suitable software engine to identify the current environment scenario. For example, the system may analyze flight simulator data to determine the current phase of flight (e.g., the current environment scenario). Identification of the current environment scenario allows the system to determine known rules that are relevant, and generate task expectations for each user for the given scenario. For example, once the system identifies that the current phase of flight is the "Climbing Phase," the system can populate the user's (e.g., aircraft crewmember's) task lists with associated tasks (e.g., "Request flap configuration," "Configure aircraft flaps," and "Complete After Takeoff Checklist"). The integration of these elements allows the monitoring and assessment of user communication to be completed programmatically by a computer system. In an aspect, this increases access to training opportunities by reducing the reliance on limited expert human instructor time, and allows for crew-based training activities to be conducted with automated training systems.

While the examples discussed above are focused on flight training, this is merely an example. As discussed further below, one or more techniques disclosed herein can be used for automated assessment of crew communication during aircraft operation, automated assessment of crew communication during operation of other vehicles or machinery, or automated assessment of multi-person communication in any structured environment, including but not limited to repair, maintenance, assembly, or any combination thereof.

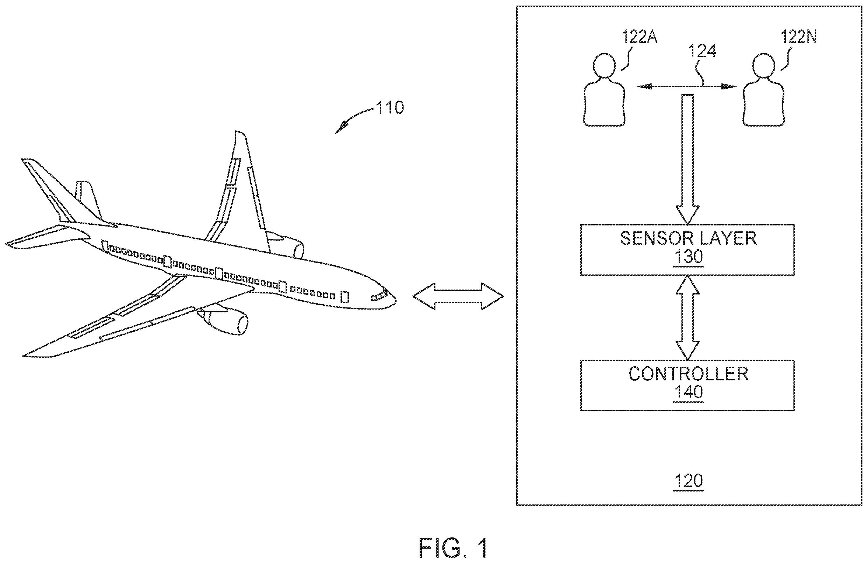

Figure 1 depicts intelligent monitoring and evaluation of crew communication, according to an aspect. In an aspect, one or more users 122A-N are engaged in training or operation of an aircraft 110. As part of this training or operation, the users 122A-N engage in communication 124 (e.g., verbal communication, using speech). For example, the users 122A-N can communicate with each other, can recite training or operational status and queries, and can engage in any other suitable communication.

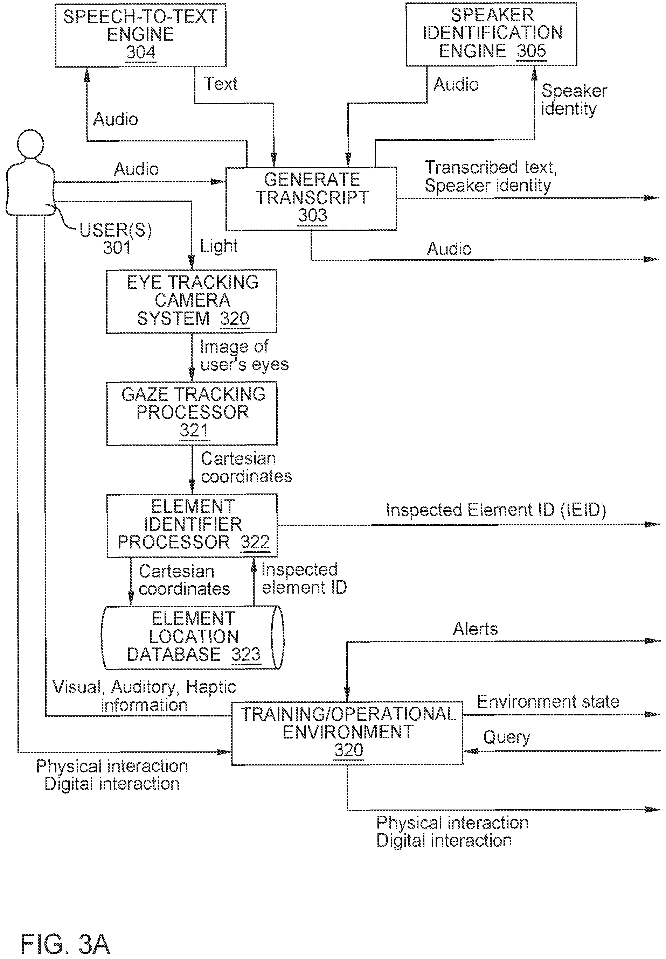

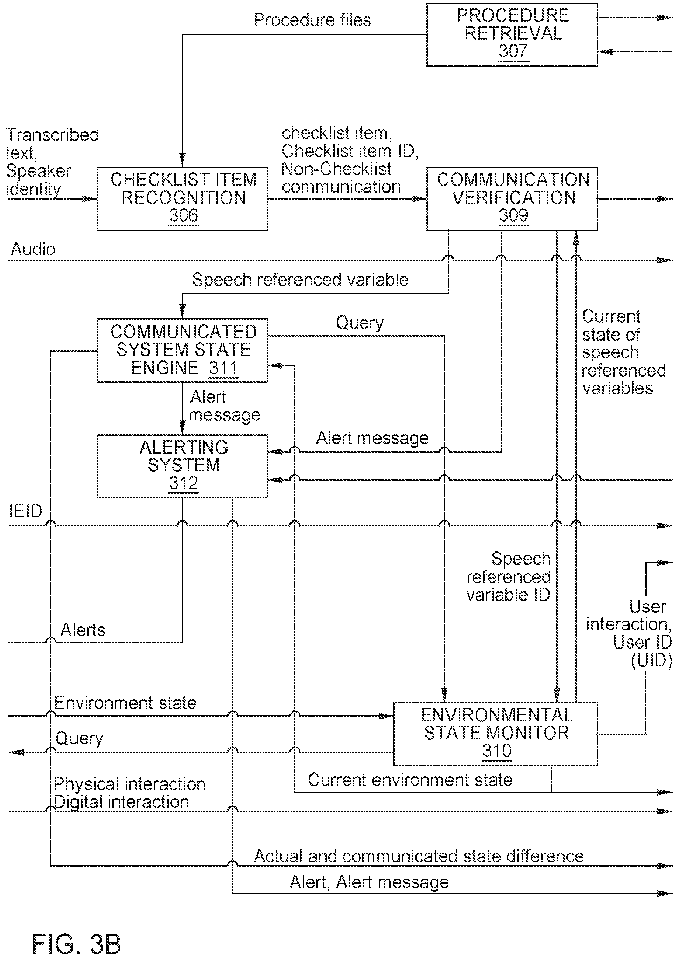

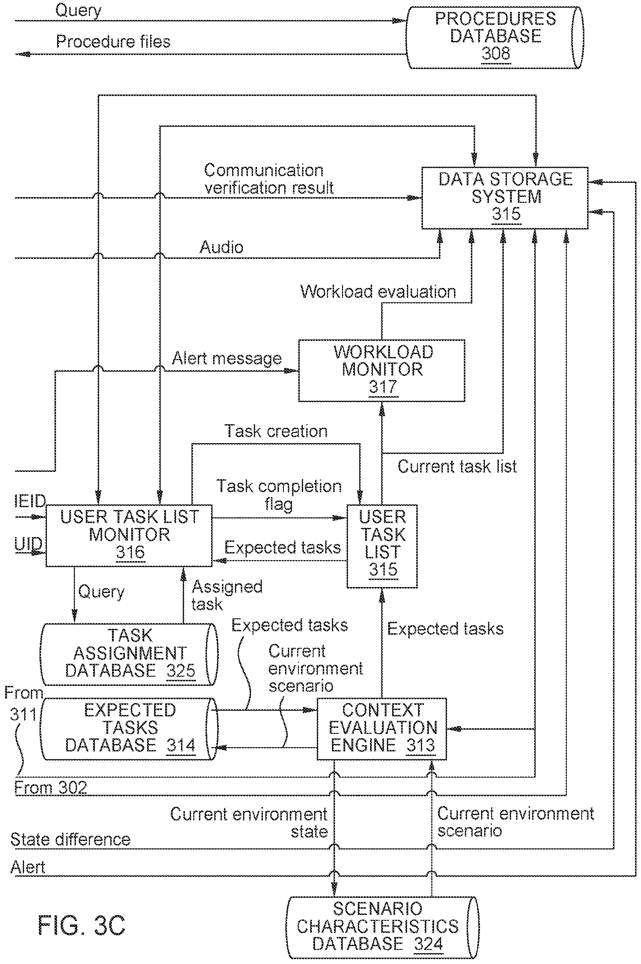

A computing environment 120 includes a sensor layer 130 to capture this communication. For example, the sensor layer 130 can include one or more audio sensors (e.g., to capture verbal communication and other sounds), one or more visual sensors (e.g., to capture eye tracking and gaze for users), one or more motion sensors, and one or more of any other suitable sensors. In an aspect, a controller 140 monitors and evaluates (e.g., to ensure that communication is proceeding as expected) communication of the user(s) (e.g., the crew) , provides any necessary alerts, and performs any other suitable tasks. This is discussed further, below, with regard to Figures 3-4.

While Figure 1 illustrates training or operation of an aircraft 110, this is merely an example. One or more techniques discussed herein can be applied to intelligent monitoring and evaluation of communication in any suitable environment. For example, any suitable vehicle (e.g., a watercraft, a submarine, an automobile, a truck, a bus, a train or other rail-based vehicle, a military or tactical vehicle, a spacecraft), or any other suitable environment (e.g., a manufacturing environment, or any other suitable indoor or outdoor environment) could be used.

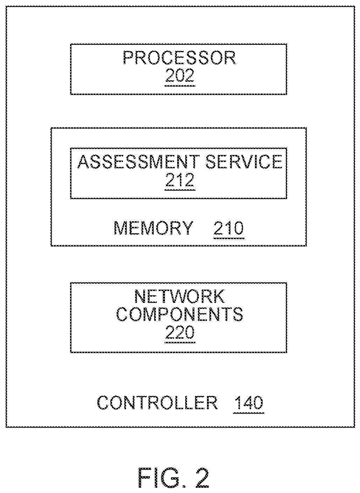

Figure 2 illustrates a controller for intelligent monitoring and evaluation of communication of users (e.g., a crew), according to an aspect. In an aspect, the controller 140 includes a processor 202, a memory 210, and network components 220. The memory 210 may take the form of any non-transitory computer-readable medium. The processor 202 generally retrieves and executes programming instructions stored in the memory 210. The processor 202 is representative of a single central processing unit (CPU), multiple CPUs, a single CPU having multiple processing cores, graphics processing units (GPUs) having multiple execution paths, and the like.

The network components 220 include the components necessary for controller 140 to interface with a suitable communication network. For example, the network components 220 can include wired, Wi-Fi, and/or cellular network interface components and associated software. Although the memory 210 is shown as a single entity, the memory 210 may include one or more memory devices having blocks of memory associated with physical addresses, such as random access memory (RAM), read only memory (ROM), flash memory, or other types of volatile and/or non-volatile memory.

The memory 210 generally includes program code for performing various functions related to use of the controller 140. The program code is generally described as various functional "applications" or "modules" within the memory 210, although alternate implementations may have different functions and/or combinations of functions. Within the memory 210, an assessment service 212 facilitates intelligent monitoring and evaluation of crew communication. This is illustrated further, below, with regard to Figures 3-4.

Although Figure 2 depicts the assessment service 212 as located in the memory 210, that representation is merely provided as an illustration for clarity. More generally, the controller 140 may include one or more computing platforms, such as computer servers for example, which may be co-located, or may form an interactively linked but distributed system, such as a cloud-based system (e.g., a public cloud, a private cloud, a hybrid cloud, or any other suitable cloud-based system). As a result, the processor 202 and the memory 210 may correspond to distributed processor and memory resources within a computing environment.

Figures 3A-C illustrate intelligent monitoring and evaluation of crew communication, according to an aspect. In an aspect, one or more users 301 (e.g., crewmembers) are connected to a common session (e.g., a training or operations monitoring session). For example, the users 301 can be engaged in a training or operational scenario and make physical or digital inputs into, and receive visual, auditory and haptic information from, an environment 302 (e.g., a training or operational environment). In an aspect, audio information from each user 301 generates a textual representation (e.g., a text transcript) at block 303. Further, light reflected from the eyes of the users 301 can be captured by an eye tracking system 320 (e.g., an eye tracking camera system).

In an aspect, the environment 302 includes the system or hardware with which the users 301 provide inputs over the course of the scenario they are completing. For example, the environment 302 can be a digital environment (e.g., a virtual environment) displayed on a desktop, laptop, tablet, mobile device, headset, or other computing device). As another example, the environment 302 can be a physical environment. This can include a flight training simulator, a flight deck, an autonomous vehicle command and control station, or any other suitable physical environment. In an aspect, physical environments may incorporate digital elements, such as computing devices. As a third example, the environment 302 can be a physical environment augmented with virtual elements displayed by a mixed reality device. These are merely examples, and the environment 302 can be any suitable environment.

While Figure 3 focuses on users (e.g., crewmembers) in a shared physical environment, for illustration, this is merely an example. One or more techniques described herein can be used for communication between different crews (e.g., different crews in a vehicle), or for communication between users located in different physical locations. For example, one or more of these techniques could be applied to communication between users located in different physical places but training or operating together. This could be used to identify mismatches in communication or environmental understanding, among other improvements.

In an aspect, an environment state monitor 310 queries the environment 302, returning one or more of variables describing the current state of the environment. Further, the environment 302 can receive alerts from an alerting system 312. In an aspect, these alerts are presented to the user 301 through visual, auditory or haptic information, or using any other suitable technique. Further, physical and digital interactions can be sent to a data storage system 318 for long term storage.

At block 303, an assessment service (e.g., the assessment service 212 illustrated in Figure 2), or any other suitable software service, generates a textual representation (e.g., a text transcript). For example, the assessment service can provide text-based transcriptions of words spoken by the one or more users 301. The assessment service can also identify each user 301 in the session.

In an aspect, speech audio can be received from a given user 301, and can be sent to any, or all, of a speech-to-text engine 304, a speaker identification engine 305, or a data storage system 318. For example, the speech-to-text engine 304 can return a text-based representation (e.g., a text transcript) of the spoken words present in the audio. The speaker identification engine 305 can return the identity of the speaker who spoke the words present in the audio. In an aspect, the returned speaker identity is attached to the transcribed text as metadata. The transcribed text with metadata can then be passed to any, or all, of block 306 for checklist item recognition, a user task list monitor 316, and a data storage system 318.

In an aspect, the speech-to-text engine 304 is responsible for providing a transcription of spoken words present in the audio received from block 303. The speech-to-text engine 304 can derive auditory information from the spoken words using linguistic algorithms. Then, the speech-to-text engine 304 can split audio waves relating to the spoken words into small, separate files on the scale of hundredths of a second. These small audio files can be matched to known phonemes of a given language. The identified phonemes are input to a machine learning (ML) network and matched to known words and phrases to provide the text-based transcription, which is returned to block 303. In an aspect, the speech-to-text engine 304 can be any suitable speech-to-text engine (e.g., an existing third party engine).

In an aspect, the speaker identification engine 305 is responsible for identifying the user 301 who spoke the words present in the audio provided by block 303. For example, the speaker identification engine 305 can compare the voice characteristics present in an audio file to voice characteristics that are matched to known speakers. In an aspect, the speaker identification engine 305 can be any suitable speaker identification engine (e.g., an existing third party engine). Alternatively, or in addition, the user associated with words present in the audio can be determined by associating each audio source with a particular user 301.

At block 306, the assessment service conducts checklist item recognition. In an aspect, the assessment service tracks the progress of one or more users 301 through a checklist or procedure from transcribed speech, associating transcriptions with each item of a checklist or procedure. For example, at block 307 the assessment service can retrieve procedures (e.g., from a procedures database 308) and provide the retrieved procedures to the assessment service for checklist item recognition. The assessment service can further use the transcribed text and the speaker identity provided by block 303. In an aspect, the procedures database 308 can be any suitable electronic repository, including an electronic database (e.g., a relational or graph database), a cloud repository, an on-site repository, or any other suitable electronic repository.

In an aspect, the progress through a checklist as observed by the transcribed speech is represented as a hidden Markov model and a dynamic programming algorithm is used to probabilistically match the transcribed speech to the checklist and determine the most likely checklist items given the transcribed text. One such example of a dynamic programming algorithm that can be used to determine checklist items is the Viterbi algorithm. Checklist items represent individual steps in a checklist or procedure that the one or more users 301 (e.g., crewmembers) are required to complete. Once a checklist item is detected from the transcribed text, the checklist item and associated ID is sent to any, or all, of a block 309 for communication verification, a user task list monitor 316, and a data storage system 318. In an aspect, if the transcribed text does not match a checklist item, the text is labelled as non-checklist communication and sent to any, or all, of a block 309 for communication verification, the user task list monitor 316, and the data storage system 318.

At block 307, the assessment service loads in procedure files (e.g., from the procedures database 308), and passes them to block 306. In an aspect, the procedures database 308 stores all procedures, checklists, or both, that may be performed by the one or more users 301 (e.g., crewmembers) during a session. For example, procedures and checklists can be stored as procedure files which contain detailed information describing the intended execution of the procedures and checklists. These procedure files may contain information such as, but not limited to, the procedure or checklist title, each spoken phrase required, the user who is required to generate each spoken phrase, each interaction with the environment required, the user who is required to perform each interaction with the environment, and the environment element, or elements, associated with each step. In an aspect, the procedures database 308 receives a query from block 307 and returns the appropriate procedure files.

At block 309, the assessment service performs communication verification. In an aspect, the assessment service validates communications made by the user 301 regarding the environment state. For example, the assessment service can validate communications by comparing enunciations of the environment state to the true state of the environment. As one example, the assessment service can compare the spoken state of a given variable (e.g., a spoken fuel level) with the actual current state of a referenced variable (e.g., a state of fuel as measured from an instrument in the environment) in order to determine whether the communicated state is congruent with the true state.

In an aspect, at block 309, as part of communication verification, the assessment service receives any, or all, of a checklist item and checklist item ID, or a non-checklist communication from block 306. For each checklist item (or non-checklist communication) received, the assessment service determines the variable referenced in the speech (e.g., a speech referenced variable defined in a procedure file sent from block 306 or 306). In an aspect, the assessment service then queries an environment state monitor 310 with the speech referenced variable ID and receives the current state of the speech referenced variable. The assessment service compares the current state of the referenced variable to the speech referenced variable, and sends the result of the comparison to the data storage system 318. In an aspect, if the result of the comparison meets a pre-defined criteria, the assessment service can send an alert message to the alerting system 312 to trigger an alert to the user 301. Further, the assessment service can send the speech referenced variables to a communicated system state engine 311.

In an aspect, an environment state monitor 310 monitors the environment 302 (e.g., the training or operational environment) and records changes in the environment. For example, when a change occurs in the environment 310, the environment state monitor 310 updates a current environment state, and sends the current environment state to a context evaluation engine 313 and a data storage system 318. In an aspect, the current environment state held by the environment state monitor 310 contains all elements in the environment and their associated states. This is merely an example, and the environment state monitor 310 can relate to any suitable subset of elements in the environment, and any suitable subset of associated states.

As part of communication verification at block 309 the assessment service can query the environment state monitor 310 with a speech referenced variable ID. In response, the environment state monitor 310 can provide the current state of the associated environment variable. Further, a communicated system state engine 311 can query the environment state monitor 310, and, in response, the environment state monitor 310 can return the current environment state. In an aspect, the environment state monitor 310 is also responsible for detecting user (e.g., crewmember) inputs to the environment 302. In an aspect, a user task list monitor 316 receives any, or all, of detected user interactions, and the user ID of the user who completed the interaction, as input.

In an aspect, a communicated system state engine 311 is responsible for comparing the state of the environment that has been represented through communication between the users 301, to the actual environment state as measured from the environment 302. Further, as part of communication verification at block 309, the assessment service can provide speech reference variables to the communicated system state engine 311, which updates the communicated environment state. In an aspect, the communicated system state engine 311 queries the environment state monitor 310 at a particular frequency (e.g., a configurable set frequency or sampling rate) and receives the current environment state. The communicated system state engine 311 compares the communicated and actual environment states, and if a difference threshold (e.g., a pre-defined difference threshold) is reached for an environment element, the communicated system state engine 311 can send an alert message to the alerting system 312 to trigger an alert to the user 301 (e.g., crewmember). The actual and communicated state difference can also be sent to a data storage system 318.

In an aspect, the alerting system 312 is responsible for providing alerts to the user 301 (e.g., through the environment 302). The alerting system 312 can deliver visual information, auditory information, haptic information, or any other suitable information (e.g., to the user 301)). Further, numerous other aspects can provide the alert message. For example, as part of communication verification at block 309 the assessment service can provide an alert message for the required alert (e.g., when a speech referenced variable does not match environment state). As another example, the communication system state engine 311 can provide the alert (e.g. when a difference threshold between communicated and actual environment state reached), or a workload monitor 317 can provide the alert (e.g., when a workload evaluation threshold reached), or any other suitable aspect can provide the alert. Further, alerts and alert messages can also be passed to the data storage system 318.

In an aspect, a context evaluation engine 313 is responsible for identifying known environment scenarios from data describing the current environment state. For example, the context evaluation engine 313 can receive the current environment state from the environment state monitor 310, and can query a scenario characteristics database 324. If the current environment state matches a known scenario defined in the scenario characteristics database 324, the current environment scenario is returned, and a set of expected tasks corresponding to the given scenario can be retrieved from the expected tasks database 314 and sent to the user task list 315. In an aspect, the scenario characteristics database 324 and the expected tasks database 314 can each be any suitable electronic repository, including an electronic database (e.g., a relational or graph database), a cloud repository, an on-site repository, or any other suitable electronic repository.

In an aspect, the expected tasks database 314 contains expected tasks that correspond to known environment scenarios. When queried by the context evaluation engine 313 with an environment scenario, the expected tasks database 314 returns the expected tasks associated with the particular scenario. For example, the expected tasks can contain information describing the task to be completed, including the completion criteria.

The user task list 315 can contain a list of expected tasks for each user 301 in the session (e.g., the training or operational session). For example, the expected tasks for each user 301 can be populated by the context evaluation engine 313. Expected tasks contained in this list could contain tasks such as, but not limited to, interactions required with the environment, required communications from the users 301 (e.g., crewmembers), commands to be issued, or checklists and procedures to be completed. The list of expected tasks can be sent to both the user task list monitor 316 and the workload monitor 317. Further, information received from the user task list monitor 316 can result in tasks in the task list being marked as completed, or the creation and addition of new tasks to the user task list 315. When the user task list 315 changes, the current task list can be sent to the data storage system 318.

In an aspect, the user task list monitor 316 is responsible for monitoring the actions and communications of the user 301 within the environment 302. The user task list monitor 316 receives any, or all, of transcribed text (e.g., representing the communications of the user 301) generated at block 303, one or more checklist items (e.g., from block 30), one or more inspected element IDs (IEIDs) (e.g., representing visual fixations of the user 301) from the element identifier processor 322, and one or more user interactions, user IDs, or both (UIDs) (e.g., representing interactions with the environment by the user 301) from the environment state monitor 310. If the information received at the user task list monitor (e.g., any, or all, of transcribed text, one or more checklist items, one or more IEIDs, one or more UIDs, or any other suitable information) matches the completion criteria for an expected task, a task completion flag is sent to the user task list 315 to mark the task as complete. If the transcribed text received does not match task completion criteria, the user task list monitor 316 queries the task assignment database 325, to determine if the information represents a task being issued. If an assigned task is received from the task assignment database 325, a task is created and added to the user task list 315. In an aspect, the task assignment database 325 can be any suitable electronic repository, including an electronic database (e.g., a relational or graph database), a cloud repository, an on-site repository, or any other suitable electronic repository.

In an aspect, a workload monitor 317 is responsible for assessing each user's workload during the session. The workload monitor 317 receives the current task list from the user task list 315 and determines each workload through the appraisal of information (e.g., the quantity and type of tasks contained within each task list). The workload evaluation can then be sent to the data storage system 318. If a workload threshold is reached, an alert message can be sent to the alerting system 312 to display an alert to the user 301.

The data storage system 318 can record relevant data (e.g., all relevant data or a portion of relevant data) to long-term storage in the session database 319. The data storage system 318 receives any, or all, of interaction data from the environment 302, audio and transcribed text from block 303, checklist state and checklist step ID from block 306, a communication verification result from block 309, the current environment state from the environment state monitor 310, the current task list from the user task list 315, the workload evaluation from the workload monitor 317, and the actual and communicated state difference from the communicated system state engine 311. In an aspect, inputs are sent to the session database 319 (e.g., all inputs or a portion of inputs) for long-term storage.

In an aspect, the session database 319 is a long-term store for relevant data (e.g., all relevant data or a portion of relevant data) that is captured during a session. The session database 319 receives data from the data storage system 318 and commits the data to long term storage. In an aspect, the session database 319 can be any suitable electronic repository, including an electronic database (e.g., a relational or graph database), a cloud repository, an on-site repository, or any other suitable electronic repository.

In an aspect, an eye tracking camera system 320 is responsible for generating an image of the eyes of the user 301 (e.g., crewmember) to determine the user's point of gaze. For example, the eye tracking camera system 320 can include an infrared light source that illuminates the eyes of the user 301, and a camera that captures the location of the glint generated from the reflection of the infrared light on the cornea of the user 301. Images of the eyes, which include the corneal reflection, are sent to a gaze tracking processor 321.

In an aspect, the gaze tracking processor 321 is responsible for identifying the point of gaze of the user 301 (e.g., crewmember). The gaze tracking processor 321 receives an image of the user's eyes from the eye tracking camera system 320 and applies image processing techniques to the images to enable the detection of the location of both the pupil and the reflection of infrared light from the cornea of the user. The point of gaze of the user 301 is calculated from any, or all, of a known geometry of the camera and infrared light sources in the eye tracking camera system 320, the eyes of the user 301, and the reflection of light on the user's cornea. The point of gaze can be represented in 2D or 3D Cartesian coordinates, depending on the environment 302. In an aspect, the point of gaze is sent to the element identifier processor 322.

In an aspect, the element identifier processor 322 is responsible for identifying whether a user 301 (e.g., crewmember) has visually fixated on an element within the environment 302. The element identifier processor 322 receives the Cartesian coordinates describing the user's point of gaze and queries the element location database 323, which stores known locations of elements within the environment 302. If the Cartesian coordinates are associated with the known location of an element, the inspected element ID is returned, and sent to the user task list monitor 316. In an aspect, the element location database 323 can be any suitable electronic repository, including an electronic database (e.g., a relational or graph database), a cloud repository, an on-site repository, or any other suitable electronic repository.

The element location database 323 can store the known locations of elements within the environment 302 (e.g., all elements, or a portion of elements). Each element within the database is associated with a set of Cartesian coordinates that describe the element's location within the environment 302. The element location database 323 receives a set of Cartesian coordinates from the element identifier processor 322, and if the set of Cartesian coordinates are associated with a known element in the database, the element ID of the inspected element is returned.

The scenario characteristics database 324 can store known scenarios that are described by the state of elements within the environment. For example, a 55000kg aircraft with landing gear lowered, flaps setting 5 with airspeed 150kts and positive rate of climb would be associated with the climbing phase of flight. When the scenario characteristics database 324 is queried by the context evaluation engine 313 with a current environment state, if an associated environment scenario is found, the environment scenario is returned. In an aspect, the scenario characteristics database 324 can be any suitable electronic repository, including an electronic database (e.g., a relational or graph database), a cloud repository, an on-site repository, or any other suitable electronic repository.

The task assignment database 325 can store known task assignment phrases. Task assignment phrases are associated with expected tasks and completion criteria that can populate the user task list 315. When queried by the user task list monitor 316, if an assigned task matches the query, the task assignment database 325 returns the assigned task. In an aspect, the task assignment database 325 can be any suitable electronic repository, including an electronic database (e.g., a relational or graph database), a cloud repository, an on-site repository, or any other suitable electronic repository.

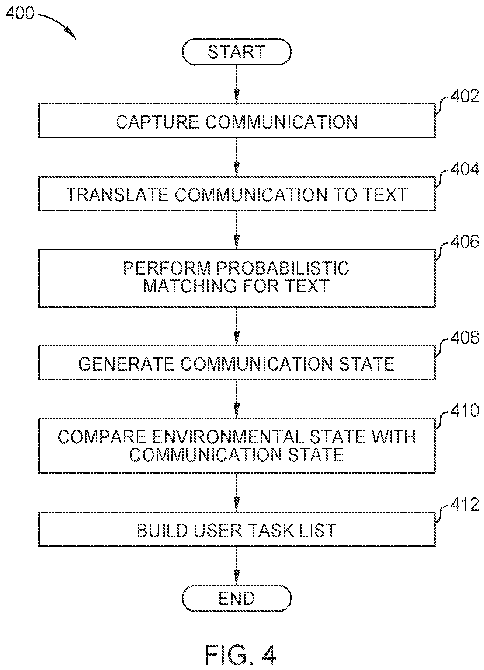

Figure 4 is a flowchart 400 illustrating intelligent monitoring and evaluation of crew communication, according to an aspect. At block 402 an assessment service (e.g., the assessment service 212 illustrated in Figure 2 or any other suitable software service) captures communication. For example, as discussed above in relation to Figures 3A-C, the assessment service can capture verbal communication between users (e.g., crewmembers) in a training or operational environment for an aircraft. This is merely an example, and the assessment service can capture any suitable communication.

At block 404, the assessment service translates the communication to text. For example, as discussed above in relation to 304 illustrated in Figures 3A-C, the assessment service can use a speech-to-text engine to generate text from spoken communication.

It is understood that a speech-to-text engine has an expected error rate in transcription (e.g., 10%). Further, spoken communication often includes additional sounds or words that do not reflect the meaning of the communication (e.g., repeated words, verbal filler phrases, and other sounds or words). Directly comparing transcribed communication to an expected checklist (e.g., as part of checklist item recognition discussed above in relation to block 306 illustrated in Figures 3A-C) is likely to result in significant errors.

In an aspect, this can be improved by using probabilistic matching from the transcribed communication to the expected checklist items. Accordingly, at block 406 the assessment service performs probabilistic matching for text. For example, a hidden Markov model (e.g., as discussed above in relation to Figures 3A-C) can be used to determine both how likely a given transcribed word is to match an expected word, and a likely match based on context. For example, assume that a checklist includes the word "taxi." A transcribed communication of the word "taxi" would be a clear match to the expected word in the checklist. By contrast, a transcribed communication of the word "fish" would be a very unlikely match. But a transcribed communication of the word "maxi" could be probabilistically matched to the expected word "taxi." Similarly, it can be expected that a user (e.g., crewmember) will proceed through a checklist in order (e.g., on average), and so the next expected communication can be identified by following the checklist in order. As discussed above in relation to Figures 3A-C, a hidden Markov model and a dynamic programming algorithm (e.g., the Viterbi algorithm) can be used for probabilistic matching.

At block 408, the assessment service generates the communication state. As discussed above in relation to Figures 3A-C, in an aspect the assessment service compares a communicated state of the environment (e.g., generated based on communication from the users) with an actual state of the environment (e.g., based on aircraft instruments or other direct sensors). In an aspect, building the communication state can be challenging. For example, communication of checklist words and phrases can be probabilistically matched using the techniques described above in relation to block 406. But a user (e.g., crewmember) can also be expected to communicate variables (e.g., unknown values). For example, a user could communicate the airspeed, or fuel level, of an aircraft. This airspeed or fuel level values are not known ahead of time, and thus cannot be directly matched to expected checklist values.

In an aspect, one or more blank variables can be used as part of probabilistic matching. For example, a given checklist procedure can be defined to include a blank variable of expected time. As one example, a checklist procedure could expect the user to recite "Heading [Heading_Value]." The Heading_Value is not known ahead of time, but is expected to be a number in a particular format (e.g., degrees and direction). The checklist procedure can include a blank variable expecting a numeric value for the Heading_Value. This can be used for probabilistic matching, to improve on transcription errors (e.g., a non-numeric transcribed value could be probabilistically matched to a numeric value). For example, if a numeric blank variable is included, the transcribed value can be corrected to match the expected number (e.g., a transcribed value of "done fate nero" could be corrected to "one eight zero" based on including a numeric blank variable).

Further, the blank variable can define a particular format of numeric value. A heading could be expected to be recited in individual digits (e.g., "one eight zero") while a fuel level could be expected to be recited as a complete number (e.g., "one eighty" or "one hundred eighty" instead of "one eight zero.") Numbers are merely one example, and any suitable blank variable types and formats can be used. For example, a choice of states could be defined, alphanumeric values could be expected, boolean values could be expected (e.g., yes or no), or any other suitable blank variable type and format.

At block 410, the assessment service compares the environmental state with the communication state. For example, as discussed above in relation to Figures 3A-C the assessment service can identify discrepancies between the communicated environmental state (e.g., a spoken phrase "Fuel level 6000kg") and the actual environmental state (e.g., an actual fuel level of 600kg). Where the discrepancy exceeds a threshold, the assessment service can generate a suitable alert or notification for the user (e.g., crewmember).

At block 412, the assessment service builds a user task list. For example, as discussed above in relation to 315 and 316 illustrated in Figures 3A-C, a user task list can contain a list of expected tasks for a user in a given training or operational session. For example, the expected tasks for each user can be populated. Expected tasks could include, interactions required with the environment, required communications from the users, commands to be issued, or checklists and procedures to be completed.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The following clauses form part of the disclosure:
Clause (1): A computer-implemented method, comprising: receiving a textual representation based on verbal communication from one or more users relating to a physical environment; generating a communicated state of the physical environment based on the textual representation; determining an actual state of the physical environment based on one or more measured characteristics of the environment; and automatically providing an alert to at least one of the one or more users, based on comparing the communicated state of the physical environment with the actual state of the physical environment.
Clause (2): The computer-implemented method of clause (1), wherein the communicated state of the physical environment comprises one or more communicated characteristics of an aircraft, and wherein the actual state of the physical environment comprises one or more measured characteristics of the aircraft.
Clause (3): The computer-implemented method of any preceding clause, especially clause (1), wherein generating the communicated state of the physical environment based on the textual representation comprises: identifying one or more expected checklist items or procedures for an aircraft; and determining the communicated state of the physical environment by probabilistically matching a first phrase in the textual representation with a second phrase in the one or more expected checklist items or procedures.
Clause (4): The computer-implemented method of any preceding clause, especially clause (3), wherein identifying one or more expected checklist items or procedures for the aircraft comprises: retrieving the one or more expected checklist items or procedures from an electronic repository.
Clause (5): The computer-implemented method of any preceding clause, especially clause (3), wherein the one or more expected checklist items or procedures for the aircraft comprise a blank variable relating to a specific variable type, and wherein the probabilistic matching is based on determining that at least a portion of the first phrase matches the specific variable type.
Clause (6): The computer-implemented method of any preceding clause, especially clause (5), wherein the specific variable type comprises a numeric variable type.
Clause (7): The computer-implemented method of any preceding clause, especially clause (3), wherein the probabilistic matching uses a hidden Markov model.
Clause (8): The computer-implemented method of any preceding clause, especially clause (1), further comprising: generating a user task list comprises a plurality of tasks for the one or more users in the physical environment; and determining, based on the textual representation, that the one or more users have completed at least a portion of the user task list.
Clause (9): The computer-implemented method of any preceding clause, especially clause (8), further comprising: determining, based on the user task list, that a workload threshold is reached for a user of the one or more users, and based on the determining providing an alert to the user.
Clause (10): The computer-implemented method of any preceding clause, especially clause (1), wherein comparing the communicated state of the physical environment with the actual state of the physical environment comprises: determining that a difference between a first state value in the communicated state and a second state value in the actual state exceeds a threshold.
Clause (11): A non-transitory computer-readable medium containing computer program code that, when executed by operation of one or more computer processors, performs operations comprising: receiving a textual representation based on verbal communication from one or more users relating to a physical environment; generating a communicated state of the physical environment based on the textual representation; determining an actual state of the physical environment based on one or more measured characteristics of the environment; and automatically providing an alert to at least one of the one or more users, based on comparing the communicated state of the physical environment with the actual state of the physical environment.
Clause (12): The non-transitory computer-readable medium of clause (11), wherein the communicated state of the physical environment comprises one or more communicated characteristics of an aircraft, and wherein the actual state of the physical environment comprises one or more measured characteristics of the aircraft.
Clause (13) The non-transitory computer-readable medium of any preceding clause, especially clause (11), wherein generating the communicated state of the physical environment based on the textual representation comprises: identifying one or more expected checklist items or procedures for an aircraft; and determining the communicated state of the physical environment by probabilistically matching a first phrase in the textual representation with a second phrase in the one or more expected checklist items or procedures.
Clause (14): The non-transitory computer-readable medium of any preceding clause, especially clause (13), wherein the one or more expected checklist items or procedures for the aircraft comprise a blank variable relating to a specific variable type, and wherein the probabilistic matching is based on determining that at least a portion of the first phrase matches the specific variable type.
Clause (15): The non-transitory computer-readable medium of claim 11, further comprising: generating a user task list comprises a plurality of tasks for the one or more users in the physical environment; and determining, based on the textual representation, that the one or more users have completed at least a portion of the user task list.
Clause (16): A system, comprising: a computer processor; and a memory having instructions stored thereon which, when executed on the computer processor, performs operations comprising: receiving a textual representation based on verbal communication from one or more users relating to a physical environment; generating a communicated state of the physical environment based on the textual representation; determining an actual state of the physical environment based on one or more measured characteristics of the environment; and automatically providing an alert to at least one of the one or more users, based on comparing the communicated state of the physical environment with the actual state of the physical environment.
Clause (17): The system of clause (16), wherein the communicated state of the physical environment comprises one or more communicated characteristics of an aircraft, and wherein the actual state of the physical environment comprises one or more measured characteristics of the aircraft.
Clause (18): The system of any preceding clause, especially clause (16), wherein generating the communicated state of the physical environment based on the textual representation comprises: identifying one or more expected checklist items or procedures for an aircraft; and determining the communicated state of the physical environment by probabilistically matching a first phrase in the textual representation with a second phrase in the one or more expected checklist items or procedures.
Clause (19) The system of any preceding clause, especially clause (18), wherein the one or more expected checklist items or procedures for the aircraft comprise a blank variable relating to a specific variable type, and wherein the probabilistic matching is based on determining that at least a portion of the first phrase matches the specific variable type.
Clause (20) The system of claim 16, further comprising: generating a user task list comprises a plurality of tasks for the one or more users in the physical environment; and determining, based on the textual representation, that the one or more users have completed at least a portion of the user task list.

While the foregoing is directed to aspects of the present disclosure, other and further aspects of the disclosure may be devised without departing from the basic scope thereof, and the scope thereof is determined by the claims that follow.

## Claims

1. A computer-implemented method, comprising:
receiving a textual representation (404) based on verbal communication from one or more users (301) relating to a physical environment (402);
generating a communicated state of the physical environment based on the textual representation (408);
determining an actual state of the physical environment based on one or more measured characteristics of the environment (410); and
automatically providing an alert (312) to at least one of the one or more users (301), based on comparing the communicated state of the physical environment with the actual state of the physical environment (309).

2. The computer-implemented method of claim 1,
wherein the communicated state of the physical environment comprises one or more communicated characteristics of an aircraft (110), and
wherein the actual state of the physical environment comprises one or more measured characteristics of the aircraft (320).

3. The computer-implemented method of claim 1 or 2,
wherein generating the communicated state of the physical environment based on the textual representation comprises:
identifying one or more expected checklist items or procedures for an aircraft (306); and
determining the communicated state of the physical environment by probabilistically matching a first phrase in the textual representation with a second phrase in the one or more expected checklist items or procedures (406).

4. The computer-implemented method of claim 3, wherein identifying one or more expected checklist items or procedures for the aircraft comprises:
retrieving the one or more expected checklist items or procedures from an electronic repository (308).

5. The computer-implemented method of claim 3 or 4,
wherein the one or more expected checklist items or procedures for the aircraft comprise a blank variable relating to a specific variable type (408), and
wherein the probabilistic matching is based on determining that at least a portion of the first phrase matches the specific variable type (408).

6. The computer-implemented method of claim 5, wherein the specific variable type comprises a numeric variable type (408).

7. The computer-implemented method of any of claims 3 to 6, wherein the probabilistic matching uses a hidden Markov model (306).

8. The computer-implemented method of any preceding claim, further comprising:
generating a user task list comprises a plurality of tasks for the one or more users in the physical environment (315, 412); and
determining, based on the textual representation, that the one or more users have completed at least a portion of the user task list (316).

9. The computer-implemented method of claim 8, further comprising:
determining, based on the user task list, that a workload threshold is reached for a user of the one or more users, and based on the determining providing an alert to the user (317).

10. The computer-implemented method of any preceding claim, wherein comparing the communicated state of the physical environment with the actual state of the physical environment comprises:
determining that a difference between a first state value in the communicated state and a second state value in the actual state exceeds a threshold (311).

11. A non-transitory computer-readable medium containing computer program code that, when executed by operation of one or more computer processors, performs operations comprising:
receiving a textual representation (404) based on verbal communication from one or more users (301) relating to a physical environment (402);
generating a communicated state of the physical environment based on the textual representation (408);
determining an actual state of the physical environment based on one or more measured characteristics of the environment (410); and
automatically providing an alert (312) to at least one of the one or more users (301), based on comparing the communicated state of the physical environment with the actual state of the physical environment (309).

12. The non-transitory computer-readable medium of claim 11,
wherein the communicated state of the physical environment comprises one or more communicated characteristics of an aircraft (110), and
wherein the actual state of the physical environment comprises one or more measured characteristics of the aircraft (320).

13. The non-transitory computer-readable medium of claim 11 or 12,
wherein generating the communicated state of the physical environment based on the textual representation comprises:
identifying one or more expected checklist items or procedures for an aircraft (306); and
determining the communicated state of the physical environment by probabilistically matching a first phrase in the textual representation with a second phrase in the one or more expected checklist items or procedures (406).

14. The non-transitory computer-readable medium of claim 13,
wherein the one or more expected checklist items or procedures for the aircraft comprise a blank variable relating to a specific variable type (408), and
wherein the probabilistic matching is based on determining that at least a portion of the first phrase matches the specific variable type (408).

15. A system, comprising:
a computer processor; and
a memory having instructions stored thereon which, when executed on the computer processor, performs operations comprising:
receiving a textual representation (404) based on verbal communication from one or more users (301) relating to a physical environment (402);
generating a communicated state of the physical environment based on the textual representation (408);
determining an actual state of the physical environment based on one or more measured characteristics of the environment (410); and
automatically providing an alert (312) to at least one of the one or more users (301), based on comparing the communicated state of the physical environment with the actual state of the physical environment (309).
